# FASCICULE DE BREVET EUROPEEN

(11) **EP 2 049 760 B1**
(45) Date de publication et mention de la délivrance du brevet: **23.11.2011**
(21) Numéro de dépôt: 07804682.8
(22) Date de dépôt: 01.08.2007
(51) Int. Cl.: E21B 17/046, E21B 17/20, E21B 17/08, F16C 27/04, E21B 43/02

(54) **CONDUIT D'EXTRACTION ARTICULÉ**
GELENKIGE ABGANGSLEITUNG
ARTICULATED EXTRACTION PIPE

(30) Priorité: 02.08.2006 FR 0607075
(43) Date de publication de la demande: 22.04.2009
(73) Titulaire: EUROSLOT KDSS France, 86140 Scorbe Clairvaux (FR)
(72) Inventeur: NADERI, Abdal Hossein, 86000 Poitiers (FR)
(74) Mandataire: Thibon, Norbert
(86) Numéro de dépôt international: PCT/IB2007/002202
(87) Numéro de publication internationale: WO 2008/015540

(56) Documents cités:
- EP-A- 0 853 202
- FR-A1- 2 268 219
- US-A- 4 938 299
- US-A1- 2 684 581
- US-A1- 3 733 853
- US-B1- 6 203 435

## Description

La présente invention concerne la conception et la réalisation d'une crépine de forage.

Cette crépine est destinée notamment au forage pétrolier. Elle peut également être utilisée pour tout autre type de forage, par exemple les forages d'eau ou de gaz, ou pour toute autre application où il peut être nécessaire de glisser une conduite comportant une partie filtrante dans un passage accidenté, c'est-à-dire comportant des portions courbes et/ou des goulots d'étranglement.

De façon classique, les crépines sont utilisées dans les opérations de forage pétrolier afin d'assurer l'élimination du sable contenu dans l'hydrocarbure avant qu'il ne remonte à la surface. Elles sont généralement montées autour de tubes perforés rigides qui assurent la résistance à l'écrasement. Pouvant être réalisées de différentes longueurs, elles forment alors des modules qui peuvent être assemblés les uns à la suite des autres au moyen de manchons de raccordement, de manière à constituer une conduite rigide qui est installée dans le puits de forage. Cette conduite peut alors être enfoncée jusqu'au fond dudit puits, de manière à atteindre la nappe de forage, qui peut se trouver à une profondeur allant jusqu'à 10 km.

Les puits de forage sont généralement réalisés sensiblement rectilignes, perpendiculaires au niveau du sol ou avec des angles d'inclinaison très faibles.

Dans certains cas, et notamment pour le forage en mer, il est avantageux du point de vue économique de réaliser plusieurs forages à partir de la même plate-forme. On réalise alors des forages dits déviés, c'est-à-dire inclinés par rapport à la verticale, droits ou avec une très légère courbure. Le puits de forage ne permet alors d'atteindre que des nappes qui sont relativement éloignées de la plate-forme, car il est nécessaire, compte tenu des contraintes géométriques du conduit d'extraction, de parcourir une grande distance avant d'atteindre une profondeur de forage suffisante pour accéder à la nappe.

Les documents US3733853, US2684581 et FR2268219 décrivent des moyens d'articulation disposés entre des éléments de tube de forage.

Il serait intéressant de pouvoir atteindre, à partir d'une même plate-forme fixe, des nappes situées à différentes distances autour de la plate-forme, qu'elles soient éloignées mais aussi proches.

L'invention vise notamment à permettre d'atteindre cet objectif.

A cet effet, elle propose une crépine de forage qui comporte une pluralité de modules tubulaires rigides perforés reliés deux à deux de façon étanche bout à bout par des moyens d'articulation à rotule permettant la circulation d'un fluide extrait à travers l'ensemble desdits modules en série et le libre mouvement desdits modules consécutifs l'un par rapport à l'autre en inclinaison dans toutes les directions. L'angle d'inclinaison maximal est avantageusement limité de manière à assurer le maintien de l'étanchéité au niveau de l'articulation. Ces modules tubulaires délimitent en outre un conduit de passage interne de section sensiblement uniforme sur la longueur de la crépine, de manière à assurer une perte de charge minimale sur toute la longueur dudit conduit.

La crépine selon l'invention est ainsi constituée d'une pluralité de modules tubulaires qui sont assemblés de manière à avoir tous les degrés de liberté en inclinaison les uns par rapport aux autres et à être individuellement orientables, si bien que l'ensemble peut prendre toutes sortes de configurations dans l'espace, et notamment que la crépine peut suivre une trajectoire courbe.

Cette crépine est notamment destinée à être insérée dans un tube de forage installé dans un puits. Elle permet d'extraire, en le filtrant, un fluide, liquide ou gaz, situé au fond du puits de forage, pour le ramener à la surface.

Le fait que les différents modules qui la constituent soient en libre mouvement les uns par rapport aux autres permet avantageusement que la crépine selon l'invention prenne d'elle-même une forme adaptée à la partie de tube de forage dans laquelle elle se trouve, de manière à poursuivre son avancée dans ledit tube au fur et à mesure qu'elle y est poussée par une force qui lui est imprimée depuis l'extérieur.

Les moyens d'articulation à rotule sont conçus pour permettre une communication étanche entre les modules tubulaires successifs, si bien que le fluide peut circuler sans discontinuité d'une extrémité à l'autre au sein du conduit délimité par la crépine selon l'invention sans risque que des particules extérieures ne viennent le contaminer ou perturber son écoulement. L'étanchéité est assurée au niveau de chaque zone d'articulation, de manière à empêcher toute fuite à cet endroit.

La crépine selon l'invention peut ainsi avantageusement suivre des lignes courbes, y compris avec de faibles rayons de courbure, et peut donc être utilisée non seulement dans des puits de forage rectilignes, mais également dans des puits de forme courbe.

Suivant une caractéristique avantageuse de l'invention, la crépine est conçue de manière à pouvoir suivre une courbe de faible rayon, de 4 m au minimum.

Elle permet alors d'accéder, depuis une même plate-forme fixe, à toutes les zones proches de la plate-forme. Elle peut en particulier avantageusement être utilisée pour des forages dits à 90 degrés, c'est-à-dire descendant à la verticale depuis la plate-forme puis formant une courbe de faible rayon à la profondeur de forage désirée pour se poursuivre, selon une direction proche de l'horizontale, vers une nappe présente dans le sous-sol.

Les moyens d'articulation sont de préférence avantageusement conçus pour limiter l'angle d'inclinaison d'un module par rapport à l'autre dans une plage de valeurs comprises entre 0 et 30 degrés. Cette caractéristique assure que l'étanchéité des moyens d'articulation soit maintenue pour toutes les positions relatives accessibies d'un module par rapport à un autre.

Suivant une caractéristique avantageuse de l'invention, la crépine comporte en outre des moyens pour solidariser l'ensemble des modules tubulaires en rotation autour de l'axe du conduit qu'elle délimite (constitué de la succession des axes longitudinaux des différents modules qu'elle comporte), que lesdits modules soient ou non inclinés les uns par rapport aux autres.

Cette caractéristique permet avantageusement de pouvoir actionner la rotation de l'ensemble de la crépine selon l'invention autour de son axe depuis une extrémité située à l'extérieur du puits, de manière à faciliter son passage en force dans d'éventuelles zones de coincement dans le puits.

La crépine selon l'invention peut ainsi s'adapter à toutes configurations de puits de forage, et suivre toutes sortes de trajectoires.

Sa capacité d'adaptation à la forme du puits, ajoutée à la possibilité de la manoeuvrer en rotation autour de son axe depuis l'extérieur, permettent de l'enfoncer dans le puits et de l'en retirer facilement même en cas d'obstacles à l'intérieur du puits, notamment de zones de colmatage. Ceci est tout à fait avantageux tant pour les puits courbes que pour les puits rectilignes.

Les moyens d'articulation à rotule des modules tubulaires de la crépine selon l'invention sont en outre avantageusement conçus pour présenter une section externe sensiblement égale à celle desdits modules tubulaires, si bien que l'encombrement de la crépine est régulier sur toute sa longueur.

De plus, des portions de crépine peuvent être avantageusement réalisées en usine, par assemblage bout à bout de modules tubulaires entre eux grâce aux moyens d'articulation à rotule, jusqu'à obtenir des longueurs compatibles avec le transport (par exemple de l'ordre de 12 m) tout en limitant le nombre d'opérations d'assemblage ultérieur. Les portions sont ensuite ainsi transportées jusqu'au lieu de forage, puis assemblées les unes aux autres sur place. La crépine selon l'invention peut alors présenter toute longueur nécessaire à la réalisation du forage, de façon classique de l'ordre de quelques kilomètres.

Suivant une autre caractéristique avantageuse de l'invention, la longueur de chacun des modules et l'angle d'inclinaison maximal permis entre deux modules consécutifs sont fixés conjointement en fonction de la courbure maximale à laquelle on souhaite soumettre la crépine. Toutes les configurations possibles sont ainsi envisageables dans le cadre de l'invention.

Suivant des modes de réalisation préférés dans la pratique industrielle, l'invention répond en outre aux caractéristiques suivantes, mises en oeuvre séparément ou en chacune de leurs combinaisons techniquement opérantes.

Ainsi, chacun des modules tubulaires constituant est muni, à chacune de ses extrémités, d'un embout tubulaire lisse non perforé dont l'axe est confondu avec l'axe dudit module. Ces embouts lisses servent avantageusement de support aux différentes parties des moyens d'articulation à rotule permettant de lier les modules tubulaires perforés entre eux pour former la crépine selon l'invention.

Selon l'invention, les moyens d'articulation à rotule comportent notamment une bague intérieure fixée coaxialement sur l'embout lisse de l'une des extrémités d'un premier module d'un couple d'éléments consécutifs, et une bague extérieure de forme générale cylindrique, rapportée coaxialement sur ladite bague intérieure, de manière à former, avec celle-ci, une cavité de réception pour une rotule qui est reliée à un second module du couple. Deux joints annulaires disposés entre la rotule et les bagues intérieure et extérieure complètent le dispositif et assurent son étanchéité.

Dans un tel mode de réalisation, la rotule est munie d'un embout tubulaire autour duquel est fixé, coaxialement, un manchon de liaison de forme générale cylindrique, lui-même apte à venir se placer coaxialement sur l'embout lisse de l'extrémité en vis-à-vis du second module.

Selon différents modes de réalisation de l'invention, les liaisons entre les éléments précités (bague intérieure sur l'embout lisse du premier module, bague extérieure sur ladite bague intérieure, manchon de liaison sur l'embout de rotule et sur l'embout lisse du second module) peuvent être réalisées de manière à être démontables ou non. Par exemple, elles peuvent être réalisées par vissage de parties filetées et taraudées complémentaires réalisées sur lesdits éléments, et sécurisation de ces assemblages par des vis ou des goujons radialement insérés dans les zones vissées.

Toutefois, selon un mode de réalisation préféré de l'invention, ces liaisons sont préférentiellement réalisées par soudure étanche, ce qui permet de réaliser un assemblage rapide et sûr dans le temps. Ceci est d'autant plus avantageux que la pression, peu importante à la surface du sol, peut augmenter jusqu'à des valeurs élevées (pouvant aller jusqu'à 500 bars par exemple) en s'enfonçant dans la profondeur du puits. Par sa réalisation et son mode d'assemblage, la crépine selon l'invention résiste bien à une telle pression exercée sur elle.

Selon l'invention, un espace est ménagé, lors de l'assemblage de deux modules tubulaires consécutifs, entre ledit manchon de liaison et la bague extérieure précédemment évoquée, afin de permettre l'inclinaison desdits modules tubulaires l'un par rapport à l'autre. Cet espace participe, avec les profils respectifs desdites bagues intérieure et extérieure, à la détermination de l'angle d'inclinaison relatif maximal entre deux modules tubulaires consécutifs de la crépine selon l'invention. Il est défini en fonction de la configuration finale que l'on souhaite donner à ladite crépine.

Il est toutefois à noter que l'espace précité entre la bague extérieure et le manchon de liaison peut piéger certaines particules, et, à la longue, limiter les mouvements relatifs de deux modules consécutifs, réduisant ainsi la flexibilité et les performances de la crépine selon l'invention.

Afin de pallier cet inconvénient, une gaine souple est placée de manière étanche autour de la zone de liaison entre ledit manchon de liaison et ladite bague extérieure, afin d'isoler ledit espace de l'environnement extérieur de la crépine selon l'invention.

Selon une autre caractéristique de l'invention, et ainsi qu'il a été mentionné plus haut, les moyens d'articulation à rotule permettent d'actionner la rotation de l'ensemble de la crépine selon l'invention autour de son axe depuis l'une de ses extrémités.

A cette fin, la bague extérieure et le manchon de liaison évoqués ci-dessus présentent des formes complémentaires aptes, une fois l'articulation à rotule assemblée, à s'emboîter les unes avec les autres et à s'entraîner mutuellement en rotation lorsque l'un des modules ainsi articulés est entraîné en rotation autour de son axe.

Un mouvement de rotation sur lui-même imprimé à l'un des modules de la crépine selon l'invention est ainsi transmis au module suivant. Il en est de même, en cascade, pour tous les modules successifs, si bien que lorsqu'un desdits modules est actionné en rotation autour de son axe, notamment un module d'extrémité disposé hors du puits de forage, l'ensemble de la crépine subit le même mouvement.

Avantageusement, des moyens de centrage de la crépine selon l'invention dans le tube de forage destiné à l'accueillir sont également disposés autour des moyens d'articulation à rotule décrits ci-dessus.

Selon un mode de réalisation préféré de l'invention, ces moyens de centrage sont formés d'un ensemble de lames de ressort régulièrement réparties autour desdits moyens d'articulation. Avantageusement, chacune desdites lames prend appui, à l'une de ses extrémités, sur le pourtour extérieur desdits moyens d'articulation, et, à son extrémité opposée, sur un anneau commun à toutes lesdites lames et apte à coulisser autour de l'un des deux modules tubulaires articulés entre eux par lesdits moyens d'articulation ou autour de l'une des extrémités desdits moyens d'articulation.

Ces moyens de centrage permettent de guider la crépine selon l'invention dans le tube de forage de telle sorte qu'elle reste dans l'axe dudit tube, favorisant ainsi l'efficacité de la filtration réalisée par ladite crépine et les déplacements de cette dernière au sein dudit tube.

Il est à noter que, selon différents modes de réalisation de l'invention, lesdits moyens de centrage peuvent être placés sur chacune des articulations de la crépine, ou sur certaines seulement desdites articulations, notamment en fonction du profil du puits de forage et, donc, de la configuration finale souhaitée pour la crépine selon l'invention.

Selon différents modes de réalisation de l'invention, chacun des modules tubulaires peut être constitué d'un tube rigide perforé dont la densité de perforation correspond aux performances de filtration souhaitées, ou être formé d'un tube rigide perforé muni d'une toile métallique rapportée de manière étanche autour de sa surface extérieure.

Il est par ailleurs à noter que, selon des modes particuliers de réalisation de l'invention, seuls les modules tubulaires amenés à être placés au fond du puis de forage peuvent être perforés, les mêmes moyens permettant d'articuler entre eux deux à deux les modules tubulaires de la crépine selon l'invention, que ceux-ci soient perforés ou non.

L'invention sera maintenant plus complètement décrite dans le cadre de caractéristiques préférées et de leurs avantages, en faisant référence aux figures 1 à 5 de la présente description dans lesquelles :
- la figure 1 représente une vue latérale d'une portion de la crépine selon l'invention ;
- la figure 2 illustre le conduit de la figure 1 avec les modules tubulaires détachés les uns des autres, en vue latérale;
- la figure 3 représente une vue en demi-coupe selon un plan longitudinal d'une portion de la crépine de la figure 1 incluant les moyens d'articulation à rotule qu'elle comporte ;
- et la figure 4 montre une vue en coupe selon un plan longitudinal d'une portion de la crépine de la figure 1, avec les modules tubulaires inclinés les uns par rapport aux autres.

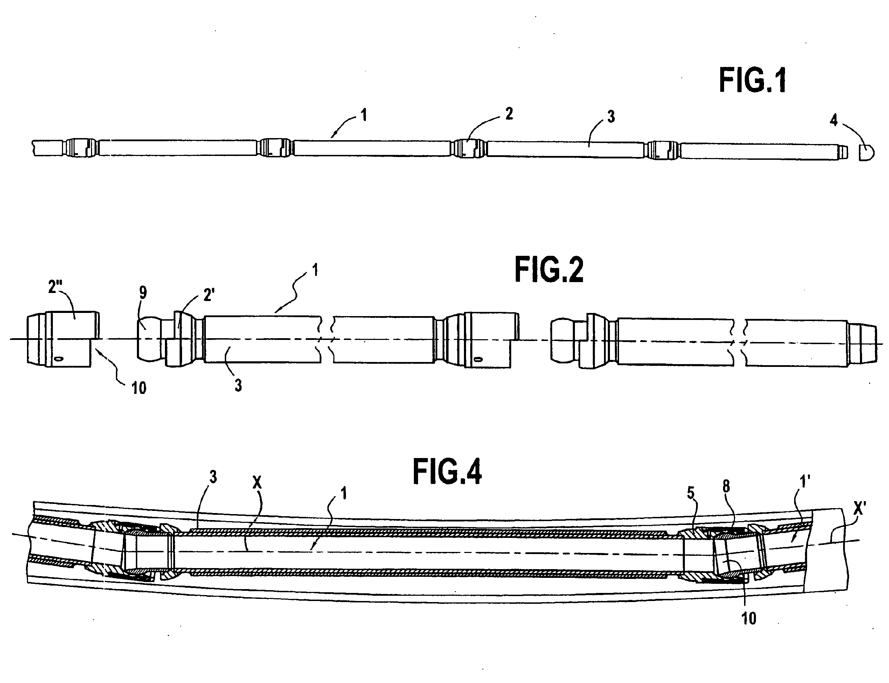

La crépine selon l'invention est représentée partiellement sur la figure 1. Elle comporte une pluralité de modules tubulaires perforés successifs 1 qui sont reliés en série les uns aux autres par des moyens d'articulation 2.

Les modules tubulaires 1 peuvent être identiques ou différents. En particulier, on peut prévoir qu'ils présentent un diamètre décroissant en allant vers l'extrémité de la crépine destinée à plonger au fond du puits au cours du forage, de sorte que ladite crépine peut ainsi pénétrer dans des tubes de forage de plus en plus étroits.

De même, on peut prévoir que tous les modules tubulaires 1 soient perforés, ou que seuls lesdits modules destinés à être placés au fond du puits de forage le soient.

En outre, selon différents modes de réalisation de l'invention, les modules tubulaires perforés peuvent être des tubes rigides dont la densité de perforation répond aux performances de filtration recherchées, ou être constitués de tubes rigides perforés munis d'une toile métallique 3 rapportée de manière étanche sur leur surface extérieure.

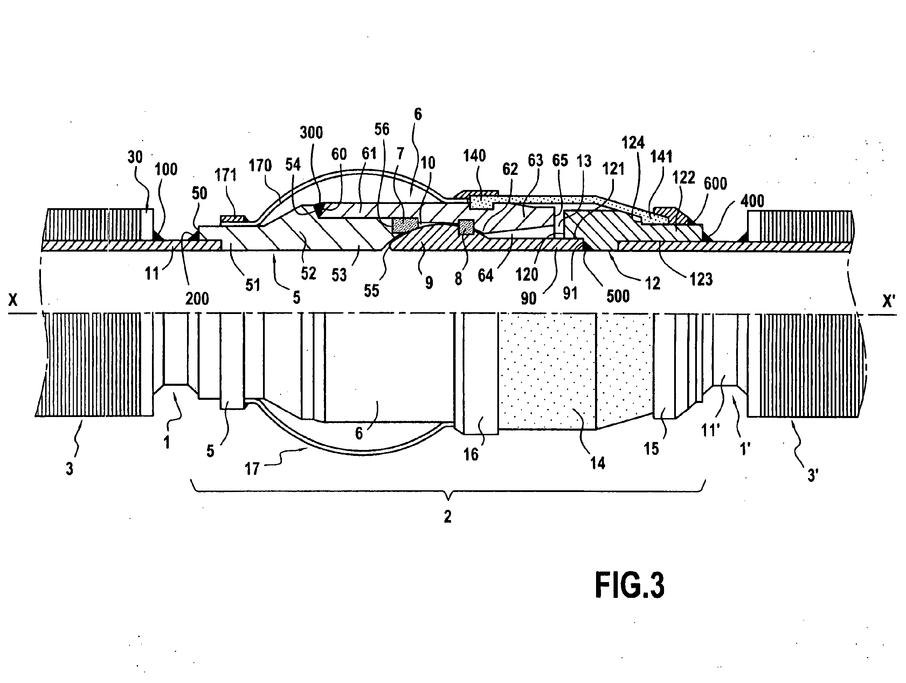

Dans ce cas, pour son montage, chaque crépine 3, avantageusement munie d'un anneau lisse 30 à chacune de ses extrémités, est enfilée autour d'un module tubulaire 1, puis est rapportée, par un cordon de soudure étanche 100, en ses anneaux d'extrémité 30, sur la face extérieure dudit module tubulaire 1, de manière à laisser libre, à chaque extrémité de celui-ci, un embout lisse 11 (voir figure 3).

Dans tous les cas, chacun desdits modules tubulaires 1 comporte, à chacune de ses extrémités, un embout lisse 1 1 , non perforé, destiné au raccordement étanche dudit module tubulaire 1 aux différents éléments des moyens de raccordement 2.

Les modules tubulaires 1 sont réalisés dans des matériaux adaptés à l'utilisation particulière de la crépine selon l'invention, notamment en acier pour le forage pétrolier. Il en est de même pour les moyens d'articulation 2 qui relient les modules successifs deux à deux.

Un capuchon 4 est prévu pour fermer l'extrémité du premier module qui sera inséré dans le puits, de façon à imposer au fluide de passer uniquement dans la crépine.

Les modules tubulaires 1 sont montrés détachés les uns des autres sur la figure 2. Chacun desdits modules 1 y est montré fixé en une de ses extrémités à une première partie 2' des moyens d'articulation 2, et à l'extrémité opposée à une seconde partie coopérante 2" de ces moyens. La première partie 2' comporte la rotule 9 et la seconde partie 2" une cavité de réception 10 de cette rotule.

Les parties coopérantes 2' d'un module 1 et 2" du module suivant sont assemblées l'une avec l'autre dans la configuration normale d'utilisation.

Les moyens d'articulation 2 sont représentés plus en détail sur la figure 3. Ils relient deux modules tubulaires 1 et 1', qui seront définis comme un module avant et un module arrière, en allant de gauche à droite sur la figure.

Ils comportent une bague intérieure 5 qui est rapportée, en son extrémité avant 50, autour de l'embout lisse arrière 11 du module tubulaire 1. Selon le mode de réalisation préféré de l'invention présenté par les figures, la liaison entre ledit embout lisse arrière 11 et la bague intérieure 5 est réalisée au moyen d'un cordon de soudure étanche 200.

La bague intérieure 5, dont l'axe de révolution X est confondu avec celui du module tubulaire 1, est formée d'une partie avant sensiblement cylindrique 51, d'une partie intermédiaire tronconique 52 prolongeant ladite partie avant 51 en s'évasant vers l'arrière de la bague 5, et d'une partie arrière sensiblement cylindrique 53 prolongeant ladite partie tronconique 52 et dont le diamètre extérieur est inférieur au diamètre arrière de cette dernière. Lesdites parties tronconique 52 et arrière 53 forment ainsi, à leur intersection, un épaulement 54 apte à recevoir en appui l'extrémité avant 60 d'une bague extérieure 6 qui sera détaillée plus loin.

Avantageusement, le diamètre intérieur de la bague 5, en sa partie avant, est égal au diamètre intérieur du module tubulaire 1 ou très proche de celui-ci afin de définir une section de passage constante pour le fluide extrait. Selon une caractéristique de l'invention, ce diamètre intérieur augmente régulièrement au voisinage de l'extrémité arrière de ladite bague intérieure 5, celle-ci présentant ainsi un profil tronconique 55 au voisinage de ladite extrémité. Selon l'invention, l'angle au sommet dudit tronc de cône est défini de telle manière que ledit profil 55 est apte à se placer sensiblement tangentiellement contre la partie avant de la rotule 9.

Les moyens d'articulation 2 comportent également une bague extérieure 6 dont le diamètre extérieur est égal au diamètre extérieur des modules tubulaires 1 et 1' à articuler entre eux, ou très proche de celui-ci. Le diamètre intérieur de la partie avant 61 de la bague extérieure 6 est légèrement supérieur au diamètre extérieur de la partie arrière 53 de la bague intérieure 5, de telle manière que ladite partie avant 61 peut être enfilée autour de ladite partie arrière 53 sur toute la longueur de cette dernière.

Les bagues intérieure 5 et extérieure 6 définissent ainsi une cavité 10 d'accueil de la rotule 9.

Cette rotule, percée axialement d'un orifice dont le diamètre est sensiblement égal aux diamètres intérieurs des modules 1 et 1' à articuler entre eux, est prolongée en sa partie arrière par un embout de rotule 90 cylindrique, dont le diamètre intérieur est égal à celui de l'orifice axial de ladite rotule 9 et dont le diamètre extérieur est inférieur au diamètre extérieur de iadite rotule.

Avantageusement, la paroi intérieure de la bague extérieure 6 forme une lèvre 62 dont le diamètre est supérieur au diamètre extérieur de l'embout de rotule 90 et inférieur au diamètre extérieur de la rotule 9. Selon l'invention, ladite lèvre 62 est apte à venir se placer, lorsque les moyens d'articulation 2 sont assemblés, au niveau de l'intersection de ladite rotule 9 et dudit embout de rotule 90. Il en résulte que la rotule 9, une fois positionnée dans sa cavité d'accueil 10, ne peut en être extraite que par le désassemblage des moyens d'articulation 2. Selon un mode de réalisation préféré de l'invention, la lèvre 62 se raccorde à la partie avant de la paroi intérieure de la cavité 10 selon un profil sensiblement sphérique correspondant à la forme extérieure de la rotule 9.

Par ailleurs, selon une caractéristique de l'invention, la partie arrière 63 de la bague extérieure 6 présente un profil intérieur tronconique 64 s'évasant vers l'extrémité arrière 65 de ladite bague. Ce profil participe, ainsi qu'il sera précisé plus loin, au débattement de l'embout de rotule 90 lors de mouvements de rotation de la rotule 9 autour d'axes différents de l'axe longitudinal X du module tubulaire 1.

Selon l'invention, lors de l'assemblage des moyens d'articulation 2, la bague extérieure 6 est fixée sur la bague intérieure 5 en son extrémité avant 60 qui vient en appui, ainsi qu'il a été précisé plus haut, de l'épaulement 54 de ladite bague intérieure 5. Selon le mode de réalisation préféré de l'invention présenté par les figures, cet assemblage est réalisé au moyen d'un cordon de soudure étanche 300.

Deux joints annulaires 7 et 8 sont par ailleurs disposés entre la surface interne de la bague extérieure 6 et la surface externe de la rotule 9, afin d'assurer l'étanchéité entre ces deux pièces sans gêner leurs déplacements relatifs. Ces joints sont avantageusement collés dans des rainures ménagées à cet effet dans la paroi interne de la bague extérieure 6, et ils viennent en contact avec la rotule 9 qui les écrase.

Avantageusement, l'un desdits joints, référencé en 7 sur la figure 3, vient également en contact avec l'extrémité arrière 56 de la bague intérieure 5, et est ainsi mis en compression lorsque l'extrémité avant 60 de la bague extérieure 6 est en appui sur l'épaulement 54 de la bague intérieure 5 autour de laquelle ladite bague extérieure est placée, assurant ainsi l'étanchéité de contact à l'intersection des trois pièces que sont la bague extérieure 6, la bague intérieure 5 et la rotule 9.

Ainsi qu'il a été mentionné plus haut, les moyens d'articulation 2 de la crépine selon l'invention comportent, outre les bagues intérieure 5 et extérieure 6 et la rotule 9, un manchon de liaison 12 qui permet de relier ladite rotule 9 à l'embout lisse 11' du module tubulaire 1' à articuler avec le module tubulaire 1.

Selon l'invention, le manchon de liaison 12, dont l'axe de révolution est confondu avec l'axe X' du module tubulaire 1', comporte, en sa partie arrière 122, un usinage coaxial 123 apte à accueillir par emboîtement, sur toute sa longueur, l'embout lisse 11' précité, réalisant ainsi la liaison dudit manchon 12 avec le module tubulaire 1'. Selon le mode de réalisation préféré de l'invention présenté par les figures, un cordon de soudure étanche 400 permet de solidariser cette liaison.

Le manchon de liaison 12 comporte par ailleurs, en sa partie avant, un lamage 121 permettant de l'emmancher coaxialement autour de la partie arrière de l'embout de rotule 90, l'extrémité arrière 91 de cette dernière venant en appui du fond dudit lamage 121. Selon le mode de réalisation préféré de l'invention présenté par les figures, un cordon de soudure étanche 500 est réalisé entre ladite extrémité arrière 91 de l'embout de soudure 90 et le fond du lamage 121 pour solidariser ledit manchon de liaison 12 de la rotule 9.

Il est à noter que, selon la configuration représentée par la figure 3, les axes X' et X respectivement des modules tubulaires 1' et 1 sont confondus, lesdits modules tubulaires perforés 1' et 1 étant alignés l'un avec l'autre. Lorsqu'une courbure est conférée à la crépine selon l'invention, lesdits axes X' et X ne sont plus confondus: ledit axe X est commun au module tubulaire 1, la bague intérieure 5, et la bague extérieure 6, et ledit axe X' est commun au module tubulaire 1', le manchon de liaison 12, et la rotule 9 munie de son embout 90, l'angle d'inclinaison entre lesdits éléments 1 et 1' étant obtenu grâce à un mouvement de rotation de la rotule autour d'un axe perpendiculaire auxdits axes X et X'.

Selon une caractéristique importante de l'invention, la profondeur du lamage 121 est définie de telle manière qu'elle permette de ménager, lors de la mise en place dudit manchon de liaison sur l'embout de rotule 90, un espace 13 entre l'extrémité avant 120 du manchon de liaison 12 et l'extrémité arrière 65 de la bague extérieure 6.

En combinaison avec le profil tronconique intérieur arrière 64 de ladite bague extérieure et le profil tronconique intérieur arrière 55 de la bague intérieure 5, l'espace 13 permet le débattement de l'embout de rotule 90 lors des mouvements de la rotule 9 autour d'axes non confondus avec l'axe X' du module tubulaire 1'. Il apparaît alors clairement que lesdits espace 13 et profils tronconiques 64 et 55 permettent également de limiter ce débattement, et, ainsi, le débattement angulaire relatif du module tubulaire 1' par rapport à le module tubulaire 1. Selon un mode de réalisation préféré de l'invention, ledit espace 13 et lesdits profils tronconiques 64 et 55 sont définis de manière à permettre un débattement angulaire relatif maximal de 60 degrés entre lesdits modules tubulaires perforés 1 et 1'. Ce débattement permet en particulier de garantir l'étanchéité assurée par les joints 7 et 8 précités.

L'invention telle qu'elle vient d'être décrite permet donc de réaliser un conduit comportant plusieurs modules tubulaires perforés articulés bout à bout entre eux, et dont les moyens d'articulation sont étanches vis à vis de l'extérieur, grâce aux cordons de soudure liant les différents moyens d'articulation entre eux et grâce aux joints 7 et 8 précédemment évoqués.

Il apparaît toutefois que des particules extérieures peuvent être piégées au sein de l'espace 13, pouvant conduire à limiter les possibilités de débattement de l'embout de rotule 90, et, ainsi, compromettant la flexibilité de la crépine selon l'invention.

Pour pallier cet inconvénient, l'invention prévoit de placer, autour du manchon de liaison 12 et de la bague extérieure 6, une gaine souple 14, par exemple réalisée dans un matériau plastique ou élastomère dont les caractéristiques mécaniques et thermiques sont compatibles avec l'environnement chimique et physique dans lequel la crépine selon l'invention est amenée à être placé.

Avantageusement, ladite gaine souple 14 comporte, en ses extrémités avant et arrière, respectivement une lèvre 140 et une lèvre 141 aptes à être insérées dans des gorges appropriées ménagées respectivement dans la paroi extérieure de la bague extérieure 6 et dans la paroi extérieure du manchon de liaison 12.La gaine souple 14 recouvre ainsi l'espace 13, l'isolant de l'environnement extérieur de la crépine selon l'invention, et empêchant toute particule d'y pénétrer.

Selon le mode de réalisation préféré de l'invention présenté par la figure 3, la lèvre arrière 141 est réalisée à l'extrémité arrière de la gaine souple 14, et apte à venir en appui contre un épaulement 124 formé sur la paroi extérieure du manchon de liaison 12. Les parties coopérantes de la lèvre 141 et de l'épaulement 124 sont avantageusement orientées vers l'arrière du manchon 12, de manière à placer la gaine souple 14 en extension longitudinale lors de son positionnement.

Il est à noter que la limitation de l'angle maximal relatif entre deux modules tubulaires successifs, en limitant également l'extension maximale de la gaine souple 14, permet de garantir la tenue mécanique de celle-ci.

Afin d'assurer le maintien de la gaine souple 14, un anneau de blocage 15 est alors avantageusement enfilé autour de la partie arrière du manchon de liaison 12 et de la partie arrière de la lèvre 141. Selon le mode de réalisation préféré de l'invention présenté par la figure 3, un cordon de soudure étanche 600 permet de solidariser ledit manchon de liaison 12 et ledit anneau de blocage 15 une fois ce dernier mis en place comme précité.

A l'extrémité opposée de la gaine souple 14, un anneau de protection 16 permet, de manière analogue, le maintien en position de la partie avant de ladite gaine souple. De diamètre extérieur supérieur au diamètre extérieur de la gaine souple 14, l'anneau de protection 16 permet également d'éviter tout contact (notamment par frottement) entre celle-ci, relativement fragile mécaniquement et les parois du tube de forage apte à recevoir la crépine selon l'invention contact qui pourrait endommager, à la longue, ladite gaine souple et permettre alors le passage de particules dans l'espace 13 évoqué précédemment.

En ce sens, l'invention prévoit également des moyens 17 permettant d'assurer un centrage efficace et reproductible de la crépine dans le tube de forage qui l'accueille. Les moyens de centrage 17 permettent également d'éloigner ladite gaine souple 14 desdites parois, et contribuent donc à sa protection.

Selon le mode de réalisation préféré de l'invention présenté par les figures, les moyens de centrage 17 comportent un ensemble de lames de ressort courbes 170 régulièrement réparties sur la périphérie extérieure des moyens d'articulation 2.

Avantageusement, lesdites lames de ressort 170 sont chacune, à leur extrémité avant, rapportées par soudure sur un anneau 171 qui leur est commun, et, à leur extrémité arrière, insérées entre le diamètre extérieur de la bague extérieure 6 et l'anneau de protection 16 évoqué ci-dessus. Avantageusement, le diamètre intérieur dudit anneau 171 est légèrement supérieur au diamètre extérieur de la partie avant 51 de la bague intérieure 5, si bien qu'il peut librement coulisser autour de celle-ci lorsque les lames de ressort 170 sont écrasées.

L'invention permet ainsi de réaliser une crépine de forage articulée, dont les zones d'articulation sont étanches aux particules extérieures et ne risquent donc aucun grippage de leur fait, ladite crépine pouvant être maintenue centrée au sein du tube de forage dans lequel elle est apte à être insérée.

Selon une autre caractéristique importante, la crépine selon l'invention peut être entraînée en rotation autour de son axe par action sur un seul des modules tubulaires la constituant.

A cette fin, la bague extérieure 6 et le manchon de liaison 12 précédemment décrits sont munis, respectivement en leurs extrémités arrière 65 et avant 120, de formes complémentaires (non représentées sur la figure 3) aptes à coopérer l'une avec l'autre et à s'entraîner mutuellement en rotation lorsque les moyens d'articulation 2 sont assemblés. Avantageusement, lesdites formes complémentaires sont dimensionnées de manière à limiter au maximum la restriction qu'elles sont susceptibles d'induire dans le débattement de l'embout de rotule 90 lors des mouvements de la rotule 9. A titre d'exemple non limitatif, lesdites formes complémentaires peuvent ainsi consister en un ensemble de pions régulièrement répartis à la surface desdites extrémités et aptes à venir en contact mutuel lorsqu'un mouvement de rotation autour de son axe est imprimé à l'un des modules tubulaires 1 ou 1'. La rotation de l'un des modules tubulaires 1 ou 1' autour de son axe de révolution entraîne alors l'autre module en rotation autour de son axe de révolution, et ce quelles que soient leurs positions relatives, seuls les pions des surfaces les plus proches étant alors en contact mutuel.

L'ensemble peut, à titre d'exemple non limitatif, être fabriqué de la façon suivante.

Les modules tubulaires 1 et les différentes pièces constituant les moyens d'articulation 2 et les moyens de centrage 17 sont fabriqués en usine. Les moyens d'articulation 2 assemblés sont ensuite fixés entre les modules 1 successifs de manière à assembler ceux-ci deux à deux bout à bout. Pour ce faire, la bague extérieure 6, munie des joints 7 et 8, est tout d'abord positionnée autour de la rotule 9. L'ensemble formé par ces deux éléments est ensuite lié et soudé, d'une part, sur la bague intérieure 5, et, d'autre part, sur le manchon de liaison 12. Les moyens d'articulation ainsi assemblés sont ensuite rapportés et soudés respectivement sur l'embout lisse 11 du module tubulaire 1 et sur l'embout lisse 11' du module tubulaire 1'. La gaine souple 14 peut alors être mise en place autour du manchon de liaison 12 et de la partie arrière de la bague extérieure 6 de manière à protéger l'espace 13 décrit plus haut. La mise en place de la gaine souple 14 est ensuite complétée par l'insertion et la soudure de l'anneau de blocage 15 autour de la partie extérieure du manchon 12, et par la mise en place de l'anneau de protection 16. Les moyens de centrage 17 sont enfin mis en place comme il a été décrit plus haut autour des moyens d'articulation 2 assemblés.

Les portions de crépine ainsi réalisées sont ensuite assemblées les unes à la suite des autres à l'atelier suivant la longueur demandée (généralement 6 à 12 m) et puis sont envoyées sur le lieu de forage.

L'opération est réitérée aussi souvent que nécessaire, de manière à assembler les longueurs de crépine souhaitées.

Comme représenté sur la figure 4, les modules tubulaires 1 et 1', qui sont reliés par les moyens d'articulation 2 selon l'invention, peuvent s'incliner l'un par rapport à l'autre, en fonction du jeu permis par l'espace 13 et par les profils tronconiques 64 et 55 évoqués précédemment. Ceci est réalisé par pivotement de la rotule 9 à l'intérieur de sa cavité d'accueil 10.

La crépine dans son ensemble peut ainsi prendre une forme courbe.

En outre, grâce à la présence des formes complémentaires coopérantes de l'extrémité avant 120 du manchon de liaison 12 et de l'extrémité arrière 65 de la bague extérieure 6, un mouvement de rotation imprimé à une extrémité de la crépine est transmis de façon automatique à l'ensemble des modules qui la constituent, si bien qu'il est possible de manoeuvrer ladite crépine en rotation sur elle-même depuis l'extérieur du puits, pour faciliter son passage dans des zones colmatées.

Le mode de réalisation de la crépine selon l'invention, et notamment de fixation de ses différents modules constitutifs les uns aux autres, lui permet en outre de résister à des contraintes importantes, telles qu'il peut en être rencontrées lors des forages pétroliers.

La description qui précède explique clairement comment l'invention permet d'atteindre les objectifs qu'elle s'est fixés. En particulier, elle fournit une crépine articulée particulièrement utile dans le domaine du forage, qui présente une grande capacité d'auto-adaptation à la forme du puits, qui peut suivre des trajectoires à faible rayon de courbure, qui forme un ensemble rigide en rotation autour de son axe, lui permettant d'être manoeuvrée dans ce mouvement depuis l'extérieur du puits, et qui assure une section de passage pour le fluide extrait uniforme sur sa longueur.

## Revendications

1. Crépine de forage du type comportant une pluralité de modules tubulaires perforés (1) formés par des tubes rigides dont la perforation assure la filtration du fluide extrait, lesdits modules perforés étant reliés deux à deux de façon étanche bout à bout par des moyens d'articulation à rotule (2) permettant la circulation dudit fluide extrait et filtré à travers l'ensemble desdits modules en série ainsi que le libre mouvement desdits modules consécutifs l'un par rapport à l'autre en inclinaison dans toutes les directions, lesdits moyens d'articulation (2) comportant une bague intérieure (5) fixée à une extrémité d'un premier module (1) d'un couple de modules consécutifs, et une bague extérieure (6) fixée sur ladite bague intérieure (5) de manière à former, avec celle-ci, une cavité de réception (10) pour la rotule (9) qui est prolongée par un embout de rotule (90) par lequel elle est fixée à un second module (1') dudit couple par l'intermédiaire d'un manchon de liaison (12), l'étanchéité étant assurée par deux joints annulaires (7, 8) disposés entre ladite rotule (9) et ladite bague extérieure (6),
**caractérisée en ce que** ledit manchon de liaison (12) et la bague extérieure (6) présentent des formes complémentaires coopérant l'une avec l'autre autour dudit embout de rotule (90) avec un espace (13) qui permet le contrôle de l'inclinaison des modules l'un par rapport à l'autre et qui est isolé vis-à-vis de l'environnement dans lequel la crépine est placée à l'intérieur d'un tube de forage par une gaine souple (14) qui est placée autour dudit manchon de liaison (12) et autour de ladite bague extérieure (6) pour recouvrir ledit espace (13).

2. Crépine de forage selon la revendication 2, **caractérisée en ce que** la gaine souple (14) est placée simultanément autour d'une partie (63) de la bague extérieure (6) et autour d'une partie (120) du manchon de liaison (12) afin d'isoler ledit espace (13) vis-à-vis de l'environnement dans lequel ladite crépine est placée.

3. Crépine de forage selon la revendication 1 ou 2, **caractérisée en ce que** ladite gaine souple (14) est maintenue en place, à l'une de ses extrémités, au moyen d'un anneau de blocage (15) fixé autour dudit manchon de liaison (12) et inséré autour d'une lèvre (141) de ladite gaine souple, et, à son extrémité opposée, au moyen d'un anneau de protection (16) inséré autour d'une lèvre (140) qu'elle comporte et autour de la bague extérieure (6).

4. Crépine de forage selon l'une des revendications 1 à 3, **caractérisée en ce que** l'espace (13) disposé entre ledit manchon de liaison (12) et ladite bague extérieure (6) desdits moyens d'articulation (2) permet l'inclinaison d'un module (1) par rapport à l'autre et détermine l'angle d'inclinaison maximal entre deux modules consécutifs (1, 1').

5. Crépine de forage selon l'une des revendications 1 à 4, caractérisée en ce lesdits moyens d'articulation (2) sont conçus pour limiter l'angle d'inclinaison d'un module (1) par rapport à l'autre dans une plage de 0 à 30 degrés.

6. Crépine de forage selon l'une des revendications 1 à 5, **caractérisée en ce qu'**elle comporte des moyens pour solidariser l'ensemble desdits modules tubulaires (1) en rotation autour de l'axe central de ladite crépine, formé de l'ensemble des axes desdits modules tubulaires (1 ).

7. Crépine de forage selon la revendication 6, **caractérisée en ce que** lesdits moyens de solidarisation sont constitués, pour chaque couple de deux modules consécutifs (1, 1') de la série, de formes complémentaires ménagées aux extrémités en vis-à-vis respectivement d'un manchon de liaison (12) et d'une bague extérieure (6) fixées respectivement aux extrémités desdits modules (1, 1') destinées à être articulées par lesdits moyens d'articulation, lesdites formes complémentaires étant disposées de sorte à coopérer l'une avec l'autre pour s'entraîner mutuellement en rotation lorsqu'un mouvement de rotation autour de son axe (X, X') est imprimé à l'un desdits modules (1, 1').

8. Crépine de forage selon l'une quelconque des revendications 1 à 7, **caractérisée en ce que** la longueur de chacun desdits modules (1) et l'angle d'inclinaison maximal permis entre deux modules consécutifs (1, 1') sont fixés conjointement en fonction de la courbure maximale souhaitée pour ladite crépine.

9. Crépine de forage selon l'une quelconque des revendications 1 à 8, **caractérisée en ce qu'**elle peut suivre une courbe de faible rayon, de 4 m au minimum.

10. Crépine de forage selon l'une des revendications 1 à 9, **caractérisée en ce que** ladite bague intérieure (5) et ladite bague extérieure (6) sont fixées l'une à l'autre par vissage de zones filetées périphériques respectives coopérantes et par des vis transversales qui neutralisent les efforts de traction et/ou de compression exercés sur lesdites zones filetées.

11. Crépine de forage selon l'une des revendications 1 à 9, **caractérisée en ce que** ladite bague intérieure (5) et ladite bague extérieure (6) sont fixées l'une à l'autre par un cordon de soudure étanche (300).

12. Crépine de forage selon l'une quelconque des revendications 1 à 11, **caractérisée en ce qu'**elle comporte des moyens de centrage (17) dans le tube de forage destiné à l'accueillir, lesdits moyens de centrage (17) étant formés d'un ensemble de lames de ressort (170) régulièrement réparties à la périphérie des moyens d'articulation (2) et reliées, en l'une de leurs extrémités, à un anneau commun (171) apte à coulisser autour de l'extrémité d'un module tubulaire perforé (1), l'extrémité opposée desdites lames de ressort (170) étant liée auxdits moyens d'articulation (2).

13. Crépine de forage selon la revendication 12, **caractérisée en ce que** lesdites lames de ressort sont liées, en l'une de leurs extrémités, à l'anneau de protection (16).

14. Crépine de forage selon l'une quelconque des revendications 1 à 13, **caractérisée en ce qu'**elle comporte des modules tubulaires perforés et des modules tubulaires non perforés, et **en ce que** lesdits modules tubulaires perforés sont situés en sa portion destinée à être placée au fond du puits de forage.

15. Crépine de forage selon l'une quelconque des revendications 1 à 14, **caractérisée en ce que** chaque module tubulaire perforé (1) comporte à ses extrémités un embout lisse (11) non perforé, destiné au raccordement étanche dudit module tubulaire (1) aux différents éléments des moyens d'articulation (2).

16. Crépine de forage selon l'une quelconque des revendications 1 à 15, **caractérisée en ce qu'**elle comporte un capuchon (4) à l'extrémité du premier module (1) adapté à être inséré dans le puits, de façon à imposer au fluide de passer uniquement dans la crépine.

17. Utilisation de la crépine de forage selon l'une quelconque des revendications 1 à 16 pour le forage pétrolier.

## Claims

1. Drilling strainer of the type comprising a plurality of perforated tubular modules (1) which are formed by rigid pipes, the perforation of which assures the filtering of the fluid extracted, the said perforated modules being connected in pairs in a sealed manner end to end by ball joint articulation means (2) which permit the circulation of the said fluid which is extracted and filtered through the assembly of the said modules in series, as well as the free movement of the said consecutive modules relative to one another in inclination in all directions, the said articulation means (2) comprising an inner ring (5) which is secured to an end of a first module (1) of a pair of consecutive modules, and an outer ring (6) which is secured to the said inner ring (5) such as to form together with the latter a cavity (10) for receipt of the ball joint (9) which is extended by a ball joint joining piece (90) by means of which it is secured to a second module (1') of the said pair by means of a connection sleeve (12), the sealing being assured by two annular seals (7, 8) which are disposed between the said ball joint (9) and the said outer ring (6),
**characterised in that** the said connection sleeve (12) and the outer ring (6) have complementary forms which co-operate with one another around the said ball joint joining piece (90), with a space (13) which permits control of the inclination of the modules relative to one another, and is isolated from the environment in which the strainer is placed when in the interior of a drilling pipe by a flexible sheath (14) which is placed around the said connection sleeve (12) and around the said outer ring (6) in order to cover the said space (13).

2. Drilling strainer according to claim 1, **characterised in that** the flexible sheath (14) is placed simultaneously around a part (63) of the outer ring (6) and around a part (120) of the connection sleeve (12), in order to isolate the said space (13) from the environment in which the said strainer is placed.

3. Drilling strainer according to claim 1 or 2, **characterised in that** the said flexible sheath (14) is maintained in place at one of its ends by means of a locking ring (15) which is secured around the said connection sleeve (12) and is inserted around a lip (141) of the said flexible sheath, and, at its opposite end, it is maintained in place by means of a protective ring (16) which is inserted around a lip (140) which it comprises, and around the outer ring (6).

4. Drilling strainer according to any one of claims 1 to 3, **characterised in that** the space (13) which is disposed between the said connection sleeve (12) and the said outer ring (6) of the said articulation means (2) permits the inclination of one module (1) relative to the other, and determines the maximum angle of inclination between two consecutive modules (1, 1').

5. Drilling strainer according to any one of claims 1 to 4, **characterised in that** the said articulation means (2) are designed to limit the angle of inclination of one module (1) relative to the other in a range of 0 to 30°.

6. Drilling strainer according to any one of claims 1 to 5, **characterised in that** it comprises means for rendering the assembly of the said tubular modules (1) integral in rotation around the central axis of the said strainer, formed by all of the axes of the said tubular modules (1).

7. Drilling strainer according to claim 6, **characterised in that** the means for rendering integral are constituted, for each pair of two consecutive modules (1, 1') of the series, by complementary forms which are provided at the ends which are respectively opposite a connection sleeve (12) and an outer ring (6) which are secured respectively to the ends of the said modules (1, 1') which are designed to be articulated by the said articulation means, the said complementary forms being disposed such as to co-operate with one another in order to drive one another in rotation when a movement of rotation around its axis (X, X') is imparted to one of the said modules (1, 1').

8. Drilling strainer according to any one of claims 1 to 7, **characterised in that** the length of each of the said modules (1) and the maximum angle of inclination permitted between two consecutive modules (1, 1') are determined jointly according to the maximum curvature required for the said strainer.

9. Drilling strainer according to any one of claims 1 to 8, **characterised in that** it can follow a curve with a small radius, of 4 m at least.

10. Drilling strainer according to any one of claims 1 to 9, **characterised in that** the said inner ring (5) and the said outer ring (6) are secured to one another by screwing of respective co-operating peripheral threaded areas, and by transverse screws which neutralise the traction and/or compression forces which are exerted on the said threaded areas.

11. Drilling strainer according to any one of claims 1 to 9, **characterised in that** the said inner ring (5) and the said outer ring (6) are secured to one another by means of a sealed welding bead (300).

12. Drilling strainer according to any one of claims 1 to 11, **characterised in that** it comprises means (17) for centring in the drilling pipe which are designed to accommodate the strainer, the said centring means (17) being formed by an assembly of spring leaves (170) which are regularly distributed on the periphery of the articulation means (2), and are connected at one of their ends to a common ring (171) which can slide around the end of a perforated tubular module (1), the opposite end of the said spring leaves (170) being connected to the said articulation means (2).

13. Drilling strainer according to claim 12, **characterised in that** the said spring leaves are connected at one of their ends to the protective ring (16).

14. Drilling strainer according to any one of claims 1 to 13, **characterised in that** it comprises perforated tubular modules and non-perforated tubular modules, and **in that** the said perforated tubular modules are situated in its portion which is designed to be placed at the bottom of the drilling shaft.

15. Drilling strainer according to any one of claims 1 to 14, **characterised in that** each perforated tubular module (1) comprises at its ends a non-perforated smooth joining piece (11) which is designed for sealed connection of the said tubular module (1) to the different elements of the articulation means (2).

16. Drilling strainer according to any one of claims 1 to 15, **characterised in that** it comprises a cap (4) at the end of the first module (1) which can be inserted in the shaft, so as to force the fluid to pass only into the strainer.

17. Use of the drilling strainer according to any one of claims 1 to 16 for petroleum drilling.

## Patentansprüche

1. Siebrohr eines Typs, der eine Vielzahl perforierter rohrförmiger Module (1) umfasst, welche aus starren Rohren bestehen, deren Perforation die Filtration des geförderten Fluids gewährleistet, wobei die perforierten Module paarweise anstoßend dicht über Gelenkmittel mit Kugelgelenk (2) verbunden sind, die das Fließen des geförderten und durch sämtliche Module hintereinander gefilterten Fluids sowie das freie Bewegen dieser aufeinander folgenden Module zueinander in der Neigung in alle Richtungen ermöglichen, wobei die Gelenkmittel (2) einen Innenring (5) umfassen, der an einem Ende eines ersten Moduls (1) eines Paares aufeinander folgender Module befestigt ist, und einen Außenring (6), der an dem Innenring (5) so befestigt ist, dass er mit diesem einen Aufnahmehohlraum (10) für das Kugelgelenk (9) bildet, welches durch einen Kugelgelenkansatz (90) verlängert wird, mit dem es an einem zweiten Modul (1') des Paares über eine Verbindungsmuffe (12) befestigt ist, wobei die Dichtigkeit durch zwei Dichtringe (7, 8) gewährleistet wird, die zwischen dem Kugelgelenk (9) und dem Außenring (6) angeordnet sind,
**dadurch gekennzeichnet, dass** die Verbindungsmuffe (12) und der Außenring (6) komplementäre Formen aufweisen, die um den Kugelgelenkansatz herum kooperieren, mit einem Raum (13), der die Steuerung der Neigung der Module zueinander ermöglicht und der gegenüber der Umgebung, in der das Siebrohr im Innern eines Bohrrohrs platziert wird, durch ein flexibles Hüllrohr (14) abgesperrt ist, das um die Verbindungsmuffe (12) und um den Außenring (6) herum angeordnet ist, um den Raum (13) zu überdecken.

2. Siebrohr nach Anspruch 1, **dadurch gekennzeichnet, dass** das flexible Hüllrohr gleichzeitig um einen Teil (63) des Außenrings (6) und um einen Teil (120) der Verbindungsmuffe (12) angeordnet ist, um den Raum (13) gegenüber der Umgebung, in der das Siebrohr platziert wird, abzusperren.

3. Siebrohr nach Anspruch 1 oder 2, **dadurch gekennzeichnet, dass** das flexible Hüllrohr (14) an einem seiner Enden mit einem Arretierring (15) an seinem Platz gehalten wird, der um die Verbindungsmuffe (12) herum befestigt ist und um eine Lippe (141) des flexiblen Hüllrohrs eingesetzt wird, und an seinem anderen Ende mit einem Schutzring (16), der um eine Lippe (140) des flexiblen Hüllrohrs und um den Außenring (6) herum eingesetzt wird.

4. Siebrohr nach einem der Ansprüche 1 bis 3, **dadurch gekennzeichnet, dass** der zwischen der Verbindungsmuffe (12) und dem Außenring (6) der Gelenkmittel (2) befindliche Raum (13) die Neigung eines Moduls (1) in Bezug auf das andere ermöglicht und den maximalen Neigungswinkel zwischen zwei aufeinander folgenden Modulen (1, 1') bestimmt.

5. Siebrohr nach einem der Ansprüche 1 bis 4, **dadurch gekennzeichnet, dass** die Gelenkmittel (2) so konzipiert sind, dass sie den Neigungswinkel eines Moduls (1) in Bezug auf das andere in einem Bereich von 0 bis 30 Grad begrenzen.

6. Siebrohr nach einem der Ansprüche 1 bis 5, **dadurch gekennzeichnet, dass** es Mittel umfasst, um alle rohrförmigen Module um die Mittelachse des Siebrohrs (1) herum, die aus allen Achsen der rohrförmigen Module (1) gebildet wird, drehfest miteinander zu verbinden.

7. Siebrohr nach Anspruch 6, **dadurch gekennzeichnet, dass** die Befestigungsmittel bei jedem Paar aus zwei aufeinander folgenden Modulen (1, 1') der Reihe aus komplementären Formen bestehen, die an den Enden gegenüber einer Verbindungsmuffe (12) bzw. eines Außenrings (6) ausgebildet sind, welche an den Enden der Module (1, 1') befestigt sind, die über die Gelenkmittel angelenkt werden sollen, wobei die komplementären Formen so angeordnet sind, dass sie miteinander kooperieren, um sich gegenseitig drehend mitzunehmen, wenn einem der Module (1, 1') eine Drehbewegung um seine Achse (X, X') erteilt wird.

8. Siebrohr nach einem beliebigen der Ansprüche 1 bis 7, **dadurch gekennzeichnet, dass** die Länge jedes der Module (1) und der maximal zulässige Neigungswinkel zwischen zwei aufeinander folgenden Modulen (1, 1') gemeinsam in Abhängigkeit von der maximal erwünschten Krümmung für das Siebrohr festgelegt werden.

9. Siebrohr nach einem beliebigen der Ansprüche 1 bis 8, **dadurch gekennzeichnet, dass** es einer Krümmung mit kleinem Radius von mindestens 4 m folgen kann.

10. Siebrohr nach einem der Ansprüche 1 bis 9, **dadurch gekennzeichnet, dass** der Innenring (5) und der Außenring (6) durch Verschrauben von jeweils kooperierenden Gewindebereichen am Umfang und mit quer verlaufenden Schrauben, die die auf diese Gewindebereiche ausgeübten Zug- und/oder Druckkräfte neutralisieren, aneinander befestigt werden.

11. Siebrohr nach einem der Ansprüche 1 bis 9, **dadurch gekennzeichnet, dass** der Innenring (5) und der Außenring (6) mit einer dichten Schweißnaht (300) aneinander befestigt werden.

12. Siebrohr nach einem beliebigen der Ansprüche 1 bis 11, **dadurch gekennzeichnet, dass** es im Bohrrohr Zentriermittel (17) zu seiner Aufnahme umfasst, wobei die Zentriermittel (17) aus einer Gruppe von Federblättern (170) gebildet werden, die regelmäßig am Umfang der Gelenkmittel (2) verteilt sind und an einem ihrer Enden mit einem gemeinsamen Ring (171) verbunden sind, der um das Ende eines perforierten rohrförmigen Moduls (1) herum verschieblich ist, wobei das entgegengesetzte Ende der Federblätter (170) mit den Gelenkmitteln (2) verbunden ist.

13. Siebrohr nach Anspruch 12, **dadurch gekennzeichnet, dass** die Federblätter an einem ihrer Enden mit dem Schutzring (16) verbunden sind.

14. Siebrohr nach einem beliebigen der Ansprüche 1 bis 13, **dadurch gekennzeichnet, dass** es perforierte rohrförmige Module und unperforierte rohrförmige Module umfasst und dass sich die perforierten rohrförmigen Module in dem Abschnitt befinden, der am Boden des Bohrlochs angeordnet werden soll.

15. Siebrohr nach einem beliebigen der Ansprüche 1 bis 14, **dadurch gekennzeichnet, dass** jedes perforierte rohrförmige Modul (1) an seinen Enden ein glattes unperforiertes Ansatzstück (11) umfasst, das zum dichten Verbinden des rohrförmigen Moduls (1) mit den verschiedenen Elementen der Gelenkmittel (2) dient.

16. Siebrohr nach einem beliebigen der Ansprüche 1 bis 15, **dadurch gekennzeichnet, dass** es am Ende des ersten Moduls (1) eine Kappe (4) umfasst, die so angepasst ist, dass sie in das Bohrloch eingeführt werden kann und das Fluid zwingt, nur in das Siebrohr zu fließen.

17. Verwendung des Siebrohrs nach einem beliebigen der Ansprüche 1 bis 16 zum Bohren nach Erdöl.
